# EUROPEAN PATENT APPLICATION

(11) **EP 3 151 121 A1**
(43) Date of publication of application: **05.04.2017**
(21) Application number: 15188182.8
(22) Date of filing: 02.10.2015
(51) Int. Cl.: G06F 9/54, G06F 9/50

(54) **METHODS AND APPARATUS TO MANAGE CLOUD RESOURCES**

(71) Applicant: Nokia Solutions and Networks Oy, 02610 Espoo (FI)
(72) Inventor: Nagy, Istvan, 1015 Budapest (HU)
(74) Representative: Borgström, Markus

(57) **Abstract**

A processor implemented method to manage cloud resources and software components running on the cloud resources for a target system, includes creating at least one cloud resource, collecting information about the at least one cloud resource, storing the information in an inventory, transforming the information to a format compatible with the target system, and configuring the software components using the transformed information. A computing device includes at least one processor configured to execute the method. A computer readable medium includes instructions, wherein execution of the instructions by at least one processor causes the at least one processor to execute the method.

## Description

Example embodiments disclosed herein relate to managing cloud resources, particularly, software components running on cloud resources.

### BACKGROUND

The use of cloud infrastructures is becoming increasing popular. In data centers there is an ongoing trend to "cloudify", that is, use virtualization technologies to decouple applications from hardware deployment. Typically, applications video or web servers run on virtual machines which can be deployed on any suitable hardware. Thus, servers and applications may be invoked and shut down on demand and the hardware (for example information technology (IT) servers in racks and data storage) may be used almost arbitrarily. All of these components form a "cloud". Furthermore, if applications are built in a suitable way, the same hardware may serve almost any sort of application. Therefore, instead of building their own "clouds" service providers may make use of third party clouds, add these capacities in storage and computing to their existing ones, or even solely rely on third party resources to build a cloud infrastructure.

Modern data centers are becoming increasingly larger. As they are expensive to build and operate, utilization efficiency is one of the most important factors to consider in building and operating a data center.

Infrastructure as a Service (IaaS) is a type of service using a cloud. Examples of IaaS providers are OpenStack, VMware vCloud, Mesos and Amazon EC2 services. IaaS services are currently popular among standard IT services. The latest wave of applications to be ported to cloud/virtualized environments is reaching the telecommunication sector.

Traditionally telecommunication operators used to have services deployed as 'silos'; for each and every application the stack was built from the hardware layer up to the software components running on top, all tightly integrated. This deployment model causes suboptimal hardware usage, as the silos are planned to be able to provide their designed maximum capacity and there is no way to reallocate unused resources (for example CPU time) to more resource intensive applications.

To overcome the above utilization problem, different kinds of virtualization technologies have been introduced so that the workloads can be run more effectively, mixed on the available hardware. Many data centers run by telecommunication service providers are already using one or more virtualization/cloud systems. These heterogeneous workloads consist of a range of different applications, from mission critical operations or business support systems to real time packet processing services. In some cases, the workload is mixed with traditional IT applications that are used as company internal services.

A problem with using different kinds of virtualization technologies is that virtualization technologies (for example virtual machines and Linux software containers) sometimes have significantly different features and abstractions in many aspects (for example their image formats, and networking possibilities). Another problem is that different applications have a different approach of how they need to be configured or customized to the environment in which they run.

Currently, there are cloud application managers that are capable of managing a single cloud technology. These usually come bound with the underlying cloud platform. As an example, OpenStack has Heat that can orchestrate virtual machine deployments. VMware has vRealize Orchestrator that can manage workloads on top of vCloud. These tools are typically very specific to the underlying cloud platform and lack the support for other cloud infrastructures. They usually have a single type of SW management model; guest parameters passed to the virtual machines upon boot or script execution on hosts are examples of those.

A second generation of cloud application managers aims to support multiple different cloud types via a single abstraction application program interface (API). While this may seem as a viable approach some cloud specific features are sometimes lost with the abstraction. This typically comes from the nature of the abstraction. This cloud application manager usually supports a single software model that is driven by the cloud abstraction layer in the middle and is difficult to extend with support for other software models that are based on a different abstraction. An example of this cloud application manager is Dell Cloud Manager (formerly Enstratus).

It would be useful to provide methods and apparatus to manage virtualized infrastructures to handle different cloud types and different software management systems and models, from a single management system.

### BRIEF DESCRIPTION OF THE DRAWINGS

Example embodiments disclosed throughout the Detailed Description will be described in greater detail with reference to accompanying drawings, in which:
FIG. 1 is a block diagram illustrating a communication system including a cloud application manager and two cloud types, according to an example embodiment;
FIG. 2 is a block diagram illustrating a communication system including a resource manager, an orchestrator, an inventory builder, an inventory transformer, a software configurer and two cloud types, according to an example embodiment;
FIG. 3 is a block diagram illustrating a communication system including an orchestrator, an inventory builder, an inventory transformer, a software configurer and two cloud types, according to an example embodiment; and
FIG. 4 is a flow chart illustrating a method to manage cloud resources and software components running on the cloud resources for a target system, according to an example embodiment.

### DETAILED DESCRIPTION

The embodiments disclosed throughout this Detailed Description are examples. Although this Detailed Description may refer to "an", "one", or "some" example embodiment(s) in several locations, this does not necessarily mean that each such reference is to the same example embodiment(s), or that the feature only applies to a single example embodiment. Single features of different example embodiments may also be combined to provide other example embodiments. All words and expressions should be interpreted broadly and they are intended to illustrate, not to restrict, the example embodiments.

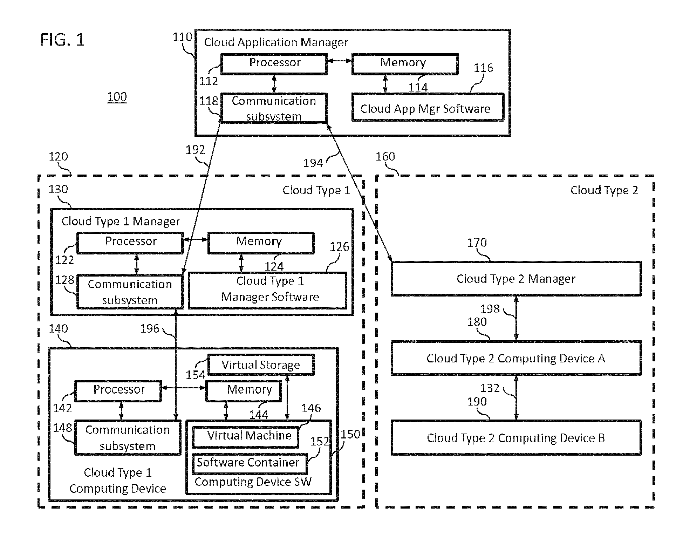

FIG. 1 illustrates communication system 100, according to an example embodiment, that includes a cloud application manager 110, and two cloud types (cloud type 1 120 and cloud type 2 160). Cloud type 1 120 includes a cloud type 1 manager 130, and a cloud type 1 computing device 140. Cloud type 2 160 includes a cloud type 2 manager 170, and two cloud type 2 computing devices (cloud type 2 computing device A 180 and cloud type 2 computing device B 190). Although only two cloud types are shown in FIG.1, more than two cloud types can be included in communication system 100.

A cloud type can be defined as a cloud that provides access to cloud resource via a particular cloud application program interface (API). In an example embodiment, the cloud type is an IaaS cloud. The particular API for a cloud type is different than an API for another cloud type. In addition, the concepts and/or semantics of a cloud type could significantly differ from another cloud type. Some examples of cloud types are OpenStack and VMware vCloud Director. While both provide access to virtual machine, networking and storage resources, there are both conceptual and semantical differences. OpenStacks' Neutron API provides network, network port, subnet, router, etc. abstractions. vClould has external network, organization network and vApp network, etc.. Mesos cloud type can run for example Docker software containers and provide access to compute nodes to run processes with isolated CPU and memory usage) without much support for network configuration. Amazon EC2 is another cloud type example with both simple (elastic IP addresses with NAT) and full configurable network setups (VPI). There are also other conceptual or semantical differences; networking is just one example.

In an example embodiment, cloud application manager 110 is a computing device including a processor 112 configured to execute cloud application manager software 116. Processor 112 is communicatively connected to and interacts directly or indirectly with memory 114 and communication subsystem 118. Memory 114 stores cloud application manager software 116 and other data. Cloud application manager software 116 manages (for example creates (or in other words reserves), runs, restarts, and shuts down) cloud resources. In example embodiments, a cloud resource is: a virtual storage (for example virtual storage 154), a virtual machine (for example virtual machine 146), a software container (for example software container 152), a network connecting cloud type computing devices (for example the network of cloud type 2 computing device A 180 and cloud type 2 computing device B 190), or a virtual network (not shown in FIG. 1, but can for example a virtual storage, a virtual machine and/or a software container connected to another virtual storage, virtual machine and/or software container, all within a cloud type computing device or spanning across multiple cloud type computing devices). In example embodiments, cloud application manager software 116 includes cloud independent APIs and/or cloud dependent APIs (not shown in FIG. 1) to interface with cloud type 1 manager software 126 and the cloud type 2 manager software (not shown in FIG. 1) of cloud type 2 manager 170. Communication subsystem 118 sends and receives communications to and from cloud application manager 110.

In an example embodiment, cloud type 1 manager 130 is a computing device including a processor 122 configured to execute cloud type 1 manager software 126. Processor 122 is communicatively connected to and interacts directly or indirectly with memory 124 and communication subsystem 128. Memory 124 stores cloud type 1 manager software 126. Cloud type 1 manager software 126 includes cloud platform software (for example Amazon Elastic Compute Cloud (EC2), OpenStack and VMware) and software to manage cloud type 1 computing device 140 and other computing devices within cloud type 1 120. In an example embodiment, cloud type 1 manager software 126 also includes cloud independent APIs (not shown in FIG. 1) to interface with and/or provide to cloud application manager software 116. Communication subsystem 128 sends and receives communications to and from cloud type 1 manager 130.

In an example embodiment, cloud type 1 computing device 140 is a computing device including a processor 142 configured to execute computing device software 150. Processor 142 is communicatively connected to and interacts directly or indirectly with memory 144 and communication subsystem 148. Memory 144 stores computing device software 150 and other data. Virtual storage 154 stores data. Computing device software 150 includes virtual machine 146 and a software container 152. (In cloud type 1 computing device 140, virtual storage 154, virtual machine 146 and software container 152 are each optional. In addition, although one virtual storage 154, one virtual machine 146 and one software container 152 are shown in FIG. 1, more than one virtual storage 154, virtual machine 146 and software container 152 may be included in cloud type 1 computing device 140. Furthermore, virtual storage 154, virtual machine 146 and software container 152 could each be connected to a virtual network (not shown in FIG. 1). The virtual network could be within cloud type 1 computing device 140 or span across multiple cloud type 1 computing devices (not shown in FIG. 1).) Communication subsystem 148 sends and receives communications to and from cloud type 1 computing device 140.

In an example embodiment, cloud type 2 manager 170 is a computing device, including a processor, communication subsystem, memory and cloud type 2 manager software (all not shown in FIG. 1), similar to cloud type 1 manager 130.

In an example embodiment, cloud type 2 computing device A is a computing device, including a processor, a communication subsystem, a memory, a virtual storage, and computing device software (including a virtual machine and software container, (all not shown in FIG. 1), similar to cloud type 1 computing device 140.

In an example embodiment, cloud type 2 computing device B is a computing device, including a processor, a communication subsystem, a memory, a virtual storage, and computing device software (including a virtual machine and software container) (all not shown in FIG. 1), similar to cloud type 1 computing device 140.

Communication subsystem 118 (of cloud application manager 110) is communicatively connected to and interacts directly or indirectly with communication subsystem 128 (of cloud type 1 manager 130) using interface 192. Accordingly, it is through communication subsystems 118 and 128 and interface 192, that cloud application manager 110 is communicatively connected to and interacts directly or indirectly with cloud type 1 manager 130.

Communication subsystem 128 (of cloud type 1 manager 130) is communicatively connected to and interacts directly or indirectly with communication subsystem 148 (of cloud type 1 computing device 140) using interface 196. Accordingly, it is through communication subsystems 128 and 148 and interface 196, that cloud type 1 manager 130 is communicatively connected to and interacts directly or indirectly with cloud type 1 computing device 140.

Communication subsystem 118 (of cloud application manager 110) is also communicatively connected to and interacts directly or indirectly with the communication subsystem (not shown in FIG. 1) of cloud type 2 manager 170, using interface 194. Accordingly, it is through these two communication subsystems and interface 194, that cloud application manager 110 is communicatively connected to and interacts directly or indirectly with cloud type 2 manager 170.

Communication subsystem (not shown in FIG. 1) of cloud type 2 manager 170 is communicatively connected to and interacts directly or indirectly with the communication subsystem (not shown in FIG. 1) of cloud type 2 computing device A 180, using interface 198. Accordingly, it is through these communication subsystems and interface 198, that cloud type 2 manager 170 is communicatively connected to and interacts directly or indirectly with cloud type 2 computing device A 180.

Communication subsystem (not shown in FIG. 1) of cloud type 2 computing device B 180 is communicatively connected to and interacts directly or indirectly with communication subsystem (not shown in FIG. 1) of cloud type 2 computing device B 190 using interface 132. Accordingly, it is through these communication subsystems and interface 132, that cloud type 2 computing device B 180 is communicatively connected to and interacts directly or indirectly with cloud type 2 computing device B 190.

In example embodiments, processors 112, 122, 142 and processors (not shown in FIG. 1) of cloud type 2 manager 170, cloud type 2 computing device A 180 and cloud type 2 computing device B 190 , each include hardware or software or any combination of hardware or software. Furthermore, although one processor is shown in FIG. 1 or discussed herein for each of the computing devices, more than one processor may be included in each of the computing devices.

In example embodiments, memories 114, 124, 144 and memories (not shown in FIG. 1) of cloud type 2 manager 170, cloud type 2 computing device A 180 and cloud type 2 computing device B 190, are each persistent stores, for example flash memory, read-only (ROM) memory or other similar storage.

In example embodiments, interfaces 192, 196, 194, 198 and 132 of FIG.1 are secure communication links, for example hypertext transfer protocol secure (HTTPS) links, over which management interfaces (for example representational state transfer (REST) APIs or simple object access protocol (SOAP) based APIs) can be used for communication between the communication subsystems in FIG. 1. In another example embodiment, interface 132 connects cloud type 2 computing device A 180 with cloud type 2 computing device B 190, to form a virtual network.

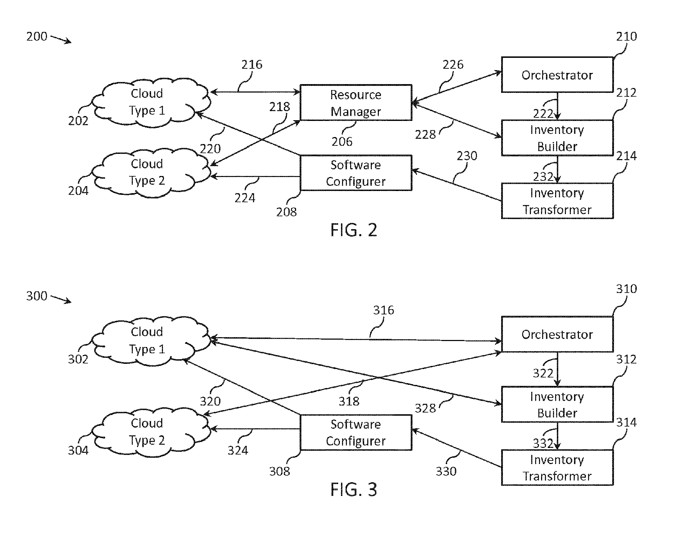

FIG. 2 illustrates communication system 200, according to an example embodiment, that includes a cloud type 1 202, a cloud type 2 204, a resource manager 206, a software configurer 208, an orchestrator 210, an inventory builder 212 and an inventory transformer 214. In an example embodiment, resource manager 206, software configurer 208, orchestrator 210, inventory builder 212 and inventory transformer 214 are included in a cloud application manager (for example cloud application manager 110 of FIG. 1). A resource manager, software configurer, orchestrator, inventory builder and inventory transformer can reside in the same process/address space. In another example embodiment, a resource manager, software configurer, orchestrator, inventory builder and inventory transformer can reside in different computing devices. Although only two cloud types are shown in FIG.2, more than two cloud types can be included in communication system 200.

In an example embodiment, interfaces 216, 218, 220 and 224 of FIG. 2 are secure communication links, for example HTTPS links, over which management interfaces (for example REST APIs or SOAP based APIs) can be used for communication between cloud type 1 202 and: resource manager 206 and software configurer 208. These interfaces can also be used for communication between a cloud type 2 204 and: resource manager 206 and software configurer 208. In an example embodiment, interfaces 226, 228, 222, 230 and 232 of FIG. 2 are secure communication links, for example HTTPS links, over which management interfaces (for example REST APIs) can be used for communication between resource manager 206, orchestrator 210, inventory builder 212, inventory transformer 214 and software configurer 208. In another example embodiment, resource manager 206, orchestrator 210, inventory builder 212, inventory transformer 214 and software configurer 208 all reside in the same process/address space, where communication can take place using functional calls.

In an example embodiment, resource manager 206 provides cloud dependent APIs for interfacing with cloud type 1 202 and cloud type 2 204, to create cloud resources. In another example embodiment, resource manager 206 also provides cloud independent APIs that provide abstract views of the created resources at cloud type 1 202 and cloud type 2 204.

In an example embodiment, orchestrator 210 creates cloud resources at cloud type 1 202 and cloud type 2 204, using the cloud dependent APIs from resource manager 206. By using one of the cloud dependent APIs or templates, orchestrator 210 can create a cloud resource by sending to cloud type 1 202 or cloud type 2 204, a request that is in the cloud type's native format, to reserve a cloud resource. A cloud resource can be for example: a virtual machine (for example virtual machine 146 of FIG. 1), a virtual network (for example a network connecting cloud type 2 computing device A 180 and cloud type 2 computing device B 190 of FIG. 1), a virtual storage (for example virtual storage 154 of FIG. 1) or a software container (for example software container 152 of FIG. 1). In an example embodiment, orchestrator 210 can define metadata, if any, for each created cloud resource. Examples of metadata are: a purpose of the cloud resource (for example "database node", "management network") and state of the cloud resource (for example "newly deployed", "about to be removed"). The metadata can be included in a cloud independent API provided by resource manager 206. Orchestrator 210 also instructs inventory builder 212 to create a cloud independent inventory, based on the created cloud resources.

In an example embodiment, inventory builder 212 uses cloud independent APIs (including any metadata) from resource manager 206 to collect cloud independent information about the created resources and build a cloud independent inventory that stores the information about the created resources. Using the cloud independent APIs, the inventory builder 212 queries the resource manager 206 to collect cloud independent information about the created cloud resources. In another example embodiment, instead of using a cloud independent API, cloud independent information about a created cloud resource is received (or in other words collected) in response to the orchestrator 210 sending to the cloud type, the request that is in the cloud type's native format, to reserve the cloud resource. The cloud independent information collected can be elements which can be included in a data structure that is used to exchange information between the resource manager 206, orchestrator 210, inventory builder 212, inventory transformer 214 and software configurer 208. Example elements are: a compute node (for example mapped from a virtual machine or a Docker software container), a network interface, a network address (for example layer 2, 3 and 4) and a storage volume. Additional elements may include metadata about the cloud resource (for example purpose and state of the cloud resource). These additional elements can be used: (1) by the inventory transformer 214 to transform the inventory to a specific model structure and/or (2) by the software configurer 208 to deploy and/or configure software components running on or using the created cloud resources.

In an example embodiment, the inventory transformer 214 transforms the cloud independent information in the inventory into software model structures which are in a format and/or include content understood by a target system. A particular transformation may be encapsulated in a plug in. By transforming the inventory into software model structures, different software management systems or software models can be supported. Example software model structures, transformed from the elements in the inventory, are: a configuration XML document that is used by Nokia's Cloud Application Manager's recipe executor component; inventory for Ansible playbooks that contains a list of hosts on which certain operations must be performed; a set of API calls to configure a Chef server to manage a group of servers; an XML document understood by an operations support system in order to integrate into its view a newly deployed network element using a cloud based application.

In an example embodiment, the software configurer 208 uses the transformed information, that is, the software model structures from the inventory transformer 214, to deploy and/or configure software components running on or using the created cloud resources in cloud type 1 202 or cloud type 2 204, to customize the software component to a target system. For example, if a virtual machine was created in cloud type 1 202, the software configurer 208 can use secure shell (SSH) network protocol to log into the virtual machine and use commands to configure software components running on the virtual machine. In another example, if a software component running on the created cloud resources in cloud type 1 202 or cloud type 2 204 has a management interface (for example a REST API), the software configurer 208 can issue an HTTP request to configure the software component. Specific examples of deployment or configuring of software components running on the created cloud resources in cloud type 1 202 or cloud type 2 204 are as follows. After a virtual machine is launched, additional software packages (for example Ansible, Nokia's Cloud Application Manager's recipe executor component, Chef Solo, or Salt) can be installed to provide certain services. In another example, a virtual machine periodically connects to a master server (for example, Chef Server and Puppet) which instructs which software packages to be added, removed or upgraded. In yet another example, environment variables (for example network port of peer services) can be passed to created cloud resources such as Linux software containers such as Docker or LXC. In another example, man-machine language (MML) commands can be issued to configure network elements of a target system which uses created cloud resources.

In an example embodiment, the details (for example in the form of detailed templates) needed to create cloud resources at cloud type 1 202 and cloud type 2 204 are contained in resource manager 206. Furthermore, in an example embodiment, the details of software management systems and models are contained in software configurer 208. Accordingly, the orchestrator 210, inventory builder 212, and inventory transformer 214 can operate in a cloud type independent and a software configuration model independent manner, thus delivering unpaired flexibility for managed cloud applications.

Creating an inventory of cloud independent information and transforming the inventory, into software model structures which are in a format and/or include content understood by a target system, makes it possible to build a loosely coupled management system that still can provide all the features and flexibility that is needed. This includes supporting legacy systems, besides supporting for all kinds of modern cloud and software stacks. It is possible to support multiple different cloud and software management technologies at the same time, from a single cloud application manager. For example datacenters virtualized by OpenStack and others virtualized by VMware can be managed by a single cloud application manager. Therefore, it is easy to support hybrid scenarios where a single application spans over multiple technologies, for example a single application in which parts of the application run on virtual machines, while other parts run on Docker software containers. In addition, applications may utilize public infrastructure providers, too, which creates a truly hybrid environment, still managed from a single cloud application manager.

FIG. 3 illustrates communication system 300, according to an example embodiment, that includes a cloud type 1 302, a cloud type 2 304, a software configurer 308, an orchestrator 310, an inventory builder 312 and an inventory transformer 314. In an example embodiment, software configurer 308, orchestrator 310, inventory builder 312 and inventory transformer 314 are included in a cloud application manager (for example cloud application manager 110 of FIG. 1). A software configurer, an orchestrator, an inventory builder and an inventory transformer can reside in the same process/address space. In another example embodiment, a software configurer, an orchestrator, an inventory builder and an inventory transformer can reside in different computing devices. Although only two cloud types are shown in FIG. 3, more than two cloud types can be included in communication system 300.

In an example embodiment, interfaces 316, 328, 318, 320 and 324 of FIG. 3 are secure communication links, for example HTTPS links, over which management interfaces (for example REST APIs or SOAP based APIs) can be used for communication between cloud type 1 302 and: orchestrator 310, inventory builder 312 and software configurer 308. These interfaces can also be used for communication between cloud type 2 304 and: orchestrator 310 and software configurer 308. In an example embodiment, interfaces 322, 332 and 330 of FIG. 3 are secure communication links, for example HTTPS links, over which management interfaces (for example REST APIs) can be used for communication between the orchestrator 310, inventory builder 312, inventory transformer 314 and software configurer 308. In another example embodiment, orchestrator 310, inventory builder 312, inventory transformer 314 and software configurer 308 all reside in the same process/address space, where communication can take place using functional calls.

In an example embodiment, the communication system 300 is the same as the communication system 200 of FIG. 2, except that there is no resource manager in communication system 300. Instead, cloud type 1 302 and cloud type 2 304 provide cloud dependent APIs for interfacing with cloud type 1 302 and cloud type 2 304, to create cloud resources. Therefore, in communication system 300, orchestrator 310, using one of the cloud dependent APIs, creates a cloud resource by sending to cloud type 1 302 or cloud type 2 304, a request that is in the cloud type's native format, to reserve a cloud resource. The rest of the functionality of orchestrator 310 is the same as the orchestrator 210 of FIG. 2.

In an example embodiment, cloud type 1 302 and cloud type 2 304 also provide cloud independent APIs for interfacing with cloud type 1 302 and cloud type 2 304, to collect cloud independent information about the created cloud resources. (See the discussion of FIG. 2 above, for a discussion about the cloud independent information which can be received (or in other words collected) from cloud type 1 302 or cloud type 2 304.) In an example embodiment, inventory builder 312 uses the cloud independent APIs to collect cloud independent information about the created resources and build a cloud independent inventory of the created resources (including any metadata). In another example embodiment, instead of using a cloud independent API, cloud independent information about a created cloud resource is received (or in other words collected) in response to the orchestrator 310 sending to the cloud type, the request that is in the cloud type's native format, to reserve the cloud resource. The rest of the functionality of inventory builder 312 is the same as the inventory builder 212 of FIG. 2. Furthermore, the functionality of inventory transformer 314 is the same as the inventory transformer 214 of FIG. 2. In addition, the functionality of software configurer 308 is the same as software configurer 208 of FIG. 2.

FIGs. 1, 2 and 3 illustrate communication systems having a simplified architecture and therefore only some elements and functions are shown. The illustrated elements and functions are all logical units, whose implementation may differ from what is shown in FIGs. 1, 2 and 3. The connections shown in FIGs. 1, 2 and 3 are logical connections; the actual physical connections may be different. It is apparent to a person skilled in the art that the systems also include other elements and functions, which are not illustrated or discussed in this Detailed Description.

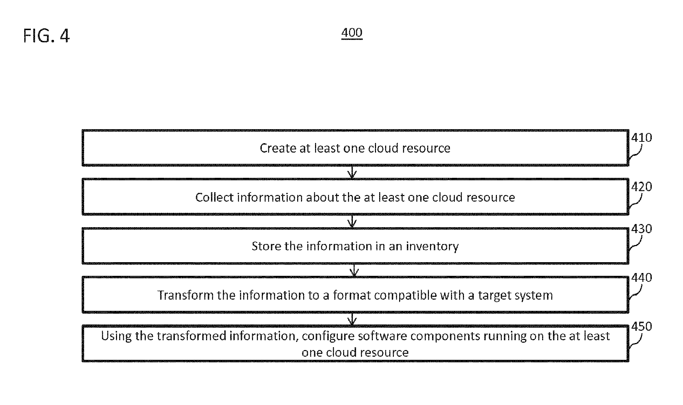

FIG. 4 illustrates a method 400 to manage cloud resources and software components running on the cloud resources for a target system, according to an example embodiment. It can be implemented by a processor of a cloud application manager (for example processor 112 of FIG. 1), or a processor of a resource manager, software configurer, orchestrator, inventory builder and inventory transformer (for example the processors (not shown in FIGs. 2 and 3) of the resource manager, software configurers, orchestrators, inventory builders and inventory transformers of FIGs. 2 and 3).

At 410, at least one cloud resource is created. The following are further example embodiments. The at least one cloud resource can be at least one of a virtual machine, a virtual network, a virtual storage and a software container. The creating of the at least one cloud resource can include sending to a cloud type, a request that is in the cloud type's native format, to reserve the at least one cloud resource. A cloud dependent API can be used to create the at least one cloud resource.

At 420, information about the at least one cloud resource is collected. The following are further example embodiments. The information collected about the at least one cloud resource is cloud independent. In an example embodiment, a cloud independent API is used to collect cloud independent information about the at least one cloud resource. In another example embodiment, the cloud independent information about the at least one cloud resource is received (or in other words collected) in response to sending to the cloud type, the request that is in the cloud type's native format, to reserve the at least one cloud resource. The cloud independent information about the at least one cloud resource includes at least one of a compute node, a network interface, a network address and a storage volume, for the at least one cloud resource.

At 430, the information is stored in an inventory.

At 440, the information is transformed to a format compatible with a target system.

At 450, using the transformed information, software components running on the at least one cloud resource for the target system are configured.

In an example embodiment, method 400 further includes defining metadata for the at least one cloud resource, and wherein the transforming further comprises using the metadata. In an example embodiment, the metadata for the at least one cloud resource includes at least one of: a purpose of the cloud resource and state of the cloud resource. In other example embodiments, there are other uses of metadata.

The blocks of method 400 in FIG. 4 are in no absolute chronological order, and some of the blocks may be performed simultaneously or in an order differing from the given one. Some of the blocks or part of the blocks can also be left out or replaced by a corresponding block or part of the blocks.

In an example embodiment, a computer readable medium includes instructions to manage cloud resources and software components running on the cloud resources for a target system, wherein execution of the instructions by at least one processor causes the at least one processor to: create at least one cloud resource; collect information about the at least one cloud resource; store the information in an inventory; transform the information to a format compatible with the target system; and configure the software components using the transformed information. In an example embodiment, the computer readable medium is a non-transitory tangible medium.

The terms "request" or "requesting", disclosed throughout the Detailed Description does not imply that a server-client or a master-slave approach is or needs to be used. The terms "requesting" and "request" can be defined as asking and the act of asking. Furthermore, the requests disclosed throughout the Detailed Description are only examples and may even include several separate communications for sending the same information. In addition, the requests may also contain other information.

It will be obvious to a person skilled in the art that, as technology advances, the inventive concept can be implemented in various ways. The invention and its embodiments are not limited to the examples described above but may vary within the scope of the claims.

## Claims

1. A processor implemented method to manage cloud resources and software components running on the cloud resources for a target system, comprising:
creating at least one cloud resource;
collecting information about the at least one cloud resource;
storing the information in an inventory;
transforming the information to a format compatible with the target system; and
configuring the software components using the transformed information.

2. The method of claim 1, wherein the at least one cloud resource is at least one of a virtual machine, a virtual network, a virtual storage and a software container.

3. The method of claim 1, wherein the creating the at least one cloud resource includes sending to a cloud type, a request that is in the cloud type's native format, to reserve the at least one cloud resource.

4. The method of claim 3, wherein the collecting information about the at least one cloud resource includes receiving from the cloud type in response to the request, the information, the information being cloud independent.

5. The method of claim 1, wherein the creating the at least one cloud resource includes using a cloud dependent API.

6. The method of claim 1, wherein the information collected about the at least one cloud resource is cloud independent.

7. The method of claim 1, wherein the collecting the information about the at least one cloud resource includes using a cloud independent API.

8. The method of claim 1, wherein the information about the at least one cloud resource includes at least one of a compute node, a network interface, a network address and a storage volume, for the at least one cloud resource.

9. The method of claim 1, further comprising defining metadata for the at least one cloud resource, and wherein the transforming further comprises using the metadata.

10. The method of claim 8, wherein the metadata for the at least one cloud resource includes at least one of: a purpose of the cloud resource and state of the cloud resource.

11. A computing device to manage cloud resources and software components running on the cloud resources for a target system, comprising:
at least one processor configured to:
create at least one cloud resource;
collect information about the at least one cloud resource;
store the information in an inventory;
transform the information to a format compatible with the target system; and
configure the software components using the transformed information.

12. The computing device of claim 11, wherein the at least one cloud resource is at least one of a virtual machine, a virtual network, a virtual storage and a software container.

13. The computing device of claim 11, wherein the at least one processor is further configured to send to a cloud type, a request that is in the cloud type's native format, to reserve the at least one cloud resource.

14. The computing device of claim 13, wherein the at least one processor is further configured to receive, from the cloud type, a cloud independent API.

15. A computer readable medium, including instructions to manage cloud resources and software components running on the cloud resources for a target system, wherein execution of the instructions by at least one processor causes the at least one processor to:
create at least one cloud resource;
collect information about the at least one cloud resource;
store the information in an inventory;
transform the information to a format compatible with the target system; and
configure the software components using the transformed information.
